# EUROPÄISCHE PATENTANMELDUNG

(11) **EP 2 518 359 A2**
(43) Veröffentlichungstag der Anmeldung: **31.10.2012**
(21) Anmeldenummer: 12165732.4
(22) Anmeldetag: 26.04.2012
(51) Int. Cl.: F16D 27/112, F16D 27/14, F16D 43/25, F16D 28/00

(54) **Kupplungsvorrichtung für ein Fahrzeugaggregat und Verfahren zur Steuerung**

(30) Priorität: 26.04.2011 DE 102011017537
(71) Anmelder: Behr Thermot-tronik GmbH, 70806 Kornwestheim (DE); Bayerische Motoren Werke Aktiengesellschaft, 80788 München (DE)
(72) Erfinder: Willers, Eike, 70469 Stuttgart (DE); Lemberger, Heinz, 85774 Unterföhring (DE)
(74) Vertreter: Grauel, Andreas

(57) **Zusammenfassung**

Eine Kupplungsvorrichtung für ein von einem Verbrennungsmotor (18) angetriebenes Aggregat (12), insbesondere für eine Wasserpumpe, sieht eine mechanische Reibkupplung (26) zwischen der Antriebs- und Abtriebswelle (24, 16) vor, die eine vollständige Entkopplung und Kopplung der beiden Wellen ermöglicht. Ein als Dehnstoffaktuator ausgebildetes Betätigungselement (34) schaltet die Kupplung. Darüber hinaus ist ein Verfahren zum Betreiben der Kupplungsvorrichtung beschrieben.

## Beschreibung

Die Erfindung betrifft eine Kupplungsvorrichtung für ein von einem Verbrennungsmotor angetriebenes Aggregat eines Fahrzeugs, mit einer drehfest mit dem Verbrennungsmotor gekoppelten Antriebswelle, einer drehfest mit dem Aggregat verbundenen Abtriebswelle und einer zwischen Antriebs- und Abtriebswelle vorgesehenen schaltbaren Kupplung.

Durch den Verbrennungsmotor angetriebene Aggregate, auch Nebenaggregate genannt, sind im Betrieb mechanisch mit dem Verbrennungsmotor gekoppelt. Ein solches Aggregat ist beispielsweise die Wasserpumpe. Es gibt jedoch Betriebszustände, in denen das Aggregat unnötigerweise angetrieben wird, beispielsweise bei einer Wasserpumpe im Kaltstartbetrieb.

Dies ist nachteilig, wenn die Wasserpumpe mitläuft, denn bei Kaltstart ist eine schnelle Motorerwärmung anzustreben und keine Motorkühlung.

Es sind mehrere Ausführungsbeispiele bekannt, bei denen ein Reibrad mit der Wasserpumpe gekoppelt wird, das wahlweise und schaltbar an einen vom Verbrennungsmotor angetriebenen Riemen angekoppelt werden kann. Eine solche Anordnung ist jedoch nur bei einer Motorneukonstruktion verwirklichbar, wenn die Riementriebsarchitektur noch flexibel gestaltbar ist. Darüber hinaus ist die Anordnung des Aggregats relativ stark vorgegeben, denn das Aggregat muss in der Nähe des Reibrads angeordnet sein. Darüber hinaus gibt es sogenannte visko-hydraulische Kupplungen, mit denen das Aggregat zu- und abgeschaltet werden kann. Nachteil dieser Lösung ist jedoch, dass keine vollständige Trennung möglich ist, auch bei offener Kupplung ist aufgrund der hydraulischen Viskosität noch ein Schlupf vorhanden. Im Stand der Technik wird folglich der Strömungsdurchfluss reduziert. Darüber hinaus ist keine sogenannte Failsafe-Funktion gegeben, wodurch sich eine unzureichende Ausfallsicherheit ergeben kann.

Aufgabe der Erfindung ist es deshalb, eine verbesserte Kupplungsvorrichtung zu schaffen, die bei sehr geringem Energieeinsatz zur Betätigung der Kupplungsvorrichtung einen hohen Energieeinspareffekt bietet.

Dies wird bei einer Kupplungsvorrichtung der eingangs genannten Art dadurch erreicht, dass eine mechanische Reibkupplung, die eine Kopplung und eine vollständige Entkopplung von Antriebswelle und Abtriebswelle ermöglicht, und zusätzlich wenigstens ein Betätigungselement in Form eines beheizbaren Dehnstoffaktuators vorgesehen ist, welcher ein Schalten der Kupplung von ihrem gekoppelten Zustand in ihren entkoppelten Zustand ermöglicht.

Die Erfindung nutzt einen elektrisch beheizbaren Dehnstoffaktuator als Betätigungsglied für eine mechanische Reibkupplung. Eine mechanische Reibkupplung soll als Trockenkupplung ausgeführt sein, sodass kein Schlupf bei entkoppeltem Aggregat vorhanden ist. Im Gegensatz zum Stand der Technik steht deshalb das Aggregat, z.B. das Laufrad einer Wasserpumpe, im entkoppelten Zustand. Ein elektrisch beheizbarer Dehnstoffaktuator hat eine sehr geringe Leistungsaufnahme von lediglich 4 bis 8 Watt, erfordert also geringste Energiemengen und ist sehr schnell betätigbar.

Die Kupplung sollte bei aktiviertem Betätigungselement in ihrem vollständig entkoppelten und bei nicht aktiviertem Betätigungselement in ihrem gekoppelten Zustand sein. Da das Aggregat bei normalem Betrieb des Verbrennungsmotors häufiger zugeschaltet als abgekoppelt ist, ist die Stromaufnahme des Dehnstoffaktuators insgesamt geringer als bei umgekehrte Schaltlogik.

Die Reibkupplung und das Betätigungselement sind darüber hinaus bevorzugt so ausgeführt, dass bei Stromausfall oder, allgemeiner, im stromlosen Zustand die Reibkupplung geschlossen ist. Dies soll eine sogenannte Failsafe-Funktion garantieren.

Der beheizbare Dehnstoffaktuator ist, wie bereits erläutert, elektrisch heizbar und besitzt somit wenigstens eine elektrische Heizeinrichtung. Gemäß der bevorzugten Ausführungsform ist diese Heizeinrichtung im Inneren des Betätigungselements mit Kontakt zum Dehnstoff angeordnet. Hierbei kann die Heizeinrichtung zum Beispiel stationär im Zylinder integriert sein oder innenseitig am Zylinder angeordnet und damit stationär positioniert sein. Alternativ hierzu oder auch zusätzlich hierzu lässt sich die Heizeinrichtung auch im Kolben anordnen. Diese Positionierung der Heizeinrichtung mit Kontakt zum Dehnstoff sorgt für ein schnelles Ansprechverhalten des Dehnstoffaktuators. Darüber hinaus ist keine Temperatorsensorik für den Dehnstoffaktuator nötig. Natürlich könnte alternativ hierzu auch die Heizeinrichtung außenseitig am Dehnstoffaktuator angeordnet sein.

Die Kupplung kann beispielsweise eine trocken laufende Reibscheibenkupplung, insbesondere eine Lamellenkupplung sein. Darüber hinaus ist aber auch eine Schlingfederkupplung vorteilhaft, denn diese Kupplungsart baut extrem kompakt. Die Unterbringung der Kupplung in eine antriebs- oder abtriebsseitige Nabe ist dadurch erleichtert.

Wenn die Antriebswelle mit einer Riemenscheibe verbunden ist, lässt sich gemäß einer Ausführungsform der Erfindung die Kupplung in die Riemenscheibe integrieren. Dies erhöht ebenfalls die Kompaktheit der gesamten Kupplungsvorrichtung.

Die bevorzugte Verwendung der Kupplungsvorrichtung findet im Zusammenhang mit einem Aggregat in Form einer Wasserpumpe der Motorkühlung statt.

Um den Hubweg des Betätigungselements sehr gering ausführen zu können und dennoch einen ausreichenden Kupplungsweg zu erhalten, ist beispielsweise eine Übersetzungseinrichtung vorgesehen, beispielsweise über einen Hebel.

Das Betätigungselement muss nicht nur schnell reagieren, wenn es zum Entkoppeln des Aggregats aktiviert wird, sondern auch umgekehrt, wenn eine schnelle Koppelung wieder erforderlich ist. Das bedeutet, das Betätigungselement muss sich auch wieder schnell abkühlen, Hierzu sind eine oder mehrere der folgenden Maßnahmen nötig. Zum einen kann eine Kühlvorrichtung vorhanden sein, beispielsweise über ein sogenanntes Peltier-Element. Die Fühleinheit über das Peltier-Element sollte insbesondere unmittelbar am Außengehäuse des Dehnstoffaktuators angrenzen. Darüber hinaus kann das Betätigungselement thermisch mit dem Kühlmittelkreislauf des Verbrennungsmotors direkt oder indirekt gekoppelt sein.

Bei Positionierung des Dehnstoffaktuators im Motorraum ist der Dehnstoffaktuator so ausgeführt, dass er bis zu Temperaturen von 130 °C nicht aktiviert wird. Die Umgebungstemperatur soll nämlich nicht dazu führen, dass der Dehnstoffaktuator ungewollt betätigt wird.

Weitere Möglichkeiten, um eine sichere Betätigung des Dehnstoffaktuators zu realisieren, sind die Positionierung des Dehnstoffaktuators im Fahrtwind, eine Isolierung zumindest des Heizbereichs des Dehnstoffaktuators, um ihn von der Motorraumtemperatur zu entkoppeln, oder die direkte oder indirekte Koppelung mit dem Kühlmittelkreislauf, die bereits angesprochen ist.

Die Temperierung des Dehnstoffaktuators für schnelles Abschalten und Zurückstellen der Kupplung kann auch auf einer modellbasierten Rechnung erfolgen. Umgebungsbedingungen wie zum Beispiel die Außentemperatur, die Fahrtgeschwindigkeit, die Luftfeuchtigkeit etc., die im Fahrbetrieb auftreten, sind Voraussetzungen zur Berechnung eines thermischen Gleichgewichts, bei dem eine optimale Wärmeaufnahme bzw. Abkühlung des Dehnstoffaktuators erfolgt.

Darüber hinaus kann es vorteilhaft sein, einen Temperaturschalter vorzusehen. Dieser mechanische Schalter kann die Leistungsaufnahme des Dehnstoffaktuators einschränken oder komplett unterbrechen, sobald der notwendige Hub des Dehnstoffaktuators zum Öffnen der Kupplung erreicht ist. Wenn das Aggregat wieder mitläuft und die Temperatur ausreichend hoch ist, schaltet der Temperaturschalter die Stromzufuhr zum Dehnstoffaktuator ab.

Alternativ oder zusätzlich kann auch ein Hubsensor vorgesehen sein. Sobald der Dehnstoffaktuator einen bestimmten Hub erreicht hat, zum Beispiel denjenigen, bei dem das Aggregat deaktiviert wird, wird die Stromzufuhr zum Dehnstoffaktuator zumindest reduziert. Mit dieser Reduktion soll ein Überschreiten dieser Endposition verhindert werden, damit der Dehnstoffaktuator bei Stromlosschaltung möglichst schnell wieder in seine nicht betätigte Ausgangsstellung zurückgeht. Natürlich kann die Endposition auch mechanisch begrenzt werden, In jedem Fall jedoch sollte die Temperatur des Dehnstoffes nach dem Entkoppeln so gering wie möglich sein, um den entkoppelten Zustand gerade zu halten. Dies ermöglicht das schnelle Abkühlen des Dehnstoffs, wenn die Kupplung wieder in den gekoppelten Zustand zurückgeschaltet werden soll. Das bedeutet, die Stromaufnahme ist zu Beginn des Schaltvorgangs sehr hoch, um ein schnelles Aufheizen des Dehnstoffes zu ermöglichen, anschließend jedoch wird die Stromzufuhr verringert, um den gerade ausreichenden Temperaturbereich zum Hatten des entkoppelten Zustands nicht zu verlassen.

Durch derartige Maßnahmen lassen sich ferner heutzutage ausgereifte Dehnstoffaktuatoren verwenden, die üblicherweise Hübe von bis zu 14 mm besitzen. Für die Anwendung bei der vorliegenden Erfindung sind aber Hübe von zum Beispiel 3 mm bereits ausreichend. Das bedeutet, die zu erwärmende Dehnstoffmenge kann sehr gering sein.

Darüber hinaus sollte eine Steuerung mit dem Betätigungselement verbunden sein, in der ein Kennfeld für Fahrzeugbetriebszustände abgelegt ist und die das Betätigungselement in Abhängigkeit von dem Fahrzeugbetriebszustand aktiviert. Diese Steuerung kann das Motorsteuergerät sein, welches in einem Logikplan abgespeichert ist, über den zusätzlich oder alternativ zur Temperatur des Kühlwassers oder des Motors auf die Temperatur des Motors rückgeschlossen wird.

Darüber hinaus betrifft die vorliegende Erfindung ein Verfahren zum Steuert einer Kupplungsvorrichtung nach der Erfindung, welches ein Koppeln und vollständiges Entkoppeln einer Wasserpumpe einer Motorkühlung von einer vom Verbrennungsmotor angetriebenen Antriebswelle ermöglicht. Dabei wird die Wasserpumpe
a) in Abhängigkeit von der Temperatur des Kühlwassers und/oder des Verbrennungsmotors, vorzugsweise bei Unterschreiten einer vorbestimmten Temperatur, und/oder
b) bei Kaltstart des Motors oder nach einer vorgegebenen Zeit nach Kaltstart des Motors und/oder
c) in Abhängigkeit vom Fahrbetriebszustand betätigt,
   um durch Aktivierung des Betätigungselements vollständig die Abtriebswelle 16 von der Antriebswelle 24 zu entkoppeln.

Unter oben genannten Punkt b) fällt auch folgender Betriebszustand: die Kühlwassertemperatur kann zu Beginn des Kaitstartvorgangs nicht sicher ermittelt werden, denn das Wasser ,,steht" im Kreislauf. Deshalb kann es sinnvoll sein, die Wasserpumpe kurzzeitig zu betätigen, um eine mittlere Kaltwassertemperatur messen zu können. Nach Ermittlung dieser Temperatur (ca. innerhalb von 3 Sekunden nach Start des Verbrennungsmotors) kann dann die Wasserpumpe abgekoppelt werden, wenn die Temperatur des Kühlwassers entsprechend niedrig ist.

Darüber hinaus kann die Wasserpumpe auch nach einer vorbestimmten Zeitdauer nach der Entkopplung mit der Antriebswelle des Verbrennungsmotors zugeschaltet werden, da auch während des entkoppelten Zustands keine sichere Temperaturmessung aufgrund des stehenden Wassers erfolgt. Ein kurzes Umwälzen des Wassers erlaubt dann eine aussagekräftige Temperaturbestimmung.

Die Zeitdauer nach der Entkoppelung, nach der die Abtriebswelle wieder angekoppelt wird, kann in Abhängigkeit von Parametern des Verbrennungsmotors, das heißt vom Fahrzeugbetriebszustand bestimmt werden. Hierbei kann beispielsweise die Motordrehzahl oder der Kraftstoffverbrauch über eine bestimmte Zeit eingehen, wobei über diese Parameter auf die augenblickliche Temperatur des Motors und des Kühlwassers geschlossen werden kann. Auch die Heizleistung im Fahrgastraum oder die Fahrgeschwindigkeit sind Parameter, die in diese Bestimmung eingehen können.

Das erfindungsgemäße Verfahren sieht auch vor, dass die Wasserpumpe bei einem Ausfall des Betätigungselements mit der Antriebswelle des Verbrennungsmotors gekoppelt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Ansicht einer ersten Ausführungsform der erfindungsgemäßen Kupplungsvorrichtung,
- Figur 2 eine schematische Ansicht einer zweiten Ausführungsform der erfindungsgemäßen Kupplungsvorrichtung, hier nur im Bereich der Reibkupplung und des Betätigungselements,
- Figuren 3a und 3b eine weitere Ausführungsform der erfindungsgemäßen Kupplungsvorrichtung, hier mit einer Schlingfederkupplung in zwei verschiedenen Schaltzuständen,
- Figur 4 eine schematische Ansicht eines bei der Erfindung eingesetzten Dehnstoffaktuators, und
- Figur 5 Schnittansicht durch andere Ausführungsform eines bei der Erfindung einsetzbaren Dehnstoffaktuators.

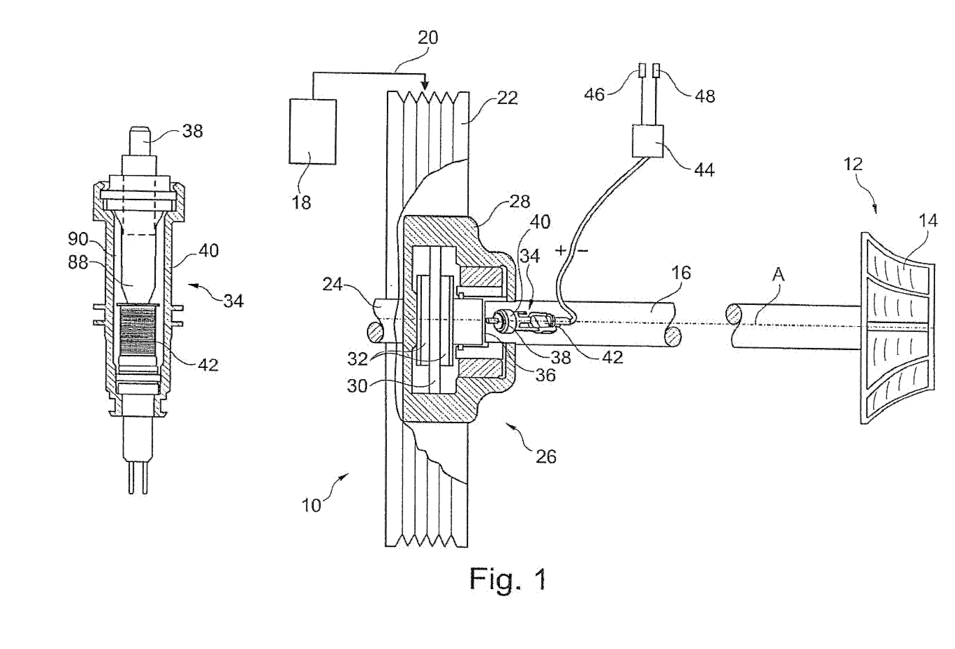

In Figur 1 ist eine Kupplungsvorrichtung 10 für ein Aggregat 12 in einem Fahrzeug dargestellt. Im dargestellten Ausführungsbeispiel ist dieses Aggregat 12 eine Wasserpumpe des Kühlkreislaufes, symbolisiert durch das Laufrad 14 der Wasserpumpe. Das Laufrad 14 ist mit einer Abtriebswelle 16 starr gekoppelt, welche im Betrieb drehfest mechanisch mit dem Verbrennungmotor 18 des Fahrzeugs gekoppelt ist und durch ihn angetrieben wird. Der Verbrennungsmotor 18 treibt dabei einen Riemen 20 an, welcher eine Riemenscheibe 22 in Drehung versetzt. Diese Riemenscheibe 22 sitzt drehfest auf der Antriebswelle 24, die wahlweise mit der Abtriebswelle 16 koppelbar ist.

Vorzugsweise in der Nabe der Riemenscheibe 22 ist mechanische Reibkupplung 26 untergebracht. Diese Reibkupplung 26 ist trocken laufend und umfasst einen mit der Abtriebswelle 16 drehfest gekoppelten Käfig 28, in dem eine axial bewegliche Lamelle 30 befestigt ist. Mit der Antriebswelle 24 wiederum sind zwei, auf entgegengesetzten Seiten der Lamelle 30 sitzende, mit einem Reibbelag versehene Lamellen 32 verbunden, die durch ein Betätigungselement 34 aufeinander zu beweglich sind, um zwischen sich die Lamelle 30 zu klemmen.

Das Betätigungselement 34 ist stationär angeordnet und drückt gegen einen Kolben 36, der mit der rechten Lamelle 32 gekoppelt ist. Stationär bedeutet dieser Zusammenhang, dass das Betätigungselement nicht mitdreht.

Die Reibkupplung 26 ermöglicht eine vollständige Koppelung bzw. Entkoppelung von Antriebs- und Abtriebswelle 24 bzw. 16.

Das Betätigungselement 34 ist ein elektrisch beheizbarer Dehnstoffaktuator mit einem Kolben 38 und einem Zylinder 40, in welchem der Kolben 38 untergebracht ist und in dem der Zylinderraum mit einem sich bei Wärmezufuhr ausdehnenden Dehnstoff gefüllt ist. Dieser Dehnstoff kann bei Erwärmen mittels einer Heizeinrichtung 42 gegebenenfalls auch einen Phasenübergang vollziehen. Alternativ oder zusätzlich kann flüssiger Dehnstoff im Zylinderraum untergebracht sein, der eine geringe Wärmeaufnahme benötigt, um eine bestimmte Ausdehnung zu erreichen.

Der Betätigungshub des Kolbens 38, der zur Verschiebung des Kolbens 38 führt, ist vorzugsweise nur etwa 3 mm. Dieser Hub reicht aus, um die Lamellenkupplung zu schließen.

Es ist unter Umständen sinnvoll, die Lamellen 32 durch Zwischenschaltung von Federelementen in ihre Ausgangsstellung zu beaufschlagen.

Gemäß der bevorzugten Ausführungsform ist jedoch eine Federvorspannung vorgesehen, welche die beiden Lamellen 32 in die Schließstellung der Kupplung beaufschlagt, in der An- und Abtriebswelle 24, 16 miteinander gekoppelt sind. Das Betätigungselement 34 ist so positioniert, dass es bei Erwärmung die Lamellen 32 voneinander weg bewegt, indem es um 180 zur Mittenachse A gedreht eingebaut ist, verglichen mit der Position in Figur 1. Damit wird sichergestellt, dass bei Stromausfall die Kupplung geschlossen ist und die Wasserpumpe angetrieben wird.

Das Betätigungselement 34 ist mit einer Steuerung 44 gekoppelt, die insbesondere auch die Motorsteuerung bildet.

In der Steuerung 44 kann ein Kennfeld für Fahrzeugbetriebszustände abgelegt sein und/oder zusätzlich verschiedene Bedingungen, unter denen die Kupplung geschlossen oder geöffnet wird.

Die Steuerung 44 kann auch mit einem oder mehreren Sensoren 46, 48 gekoppelt sein, die zum Beispiel die Kühlwassertemperatur oder die Umgebungstemperatur oder die Motortemperatur erfassen.

Ein Verfahren zum Betreiben der Kupplungsvorrichtung wird im Folgenden erläutert.

Es gibt eine vorgegebene Schaltlogik mit optional mehreren Funktionblöcken, die mit "und" miteinander verknüpft sein können und die Bedingungen zum Zuschalten der Wasserpumpe darstellen. Betont werden muss jedoch, dass die Funktionsblöcke auch nur einzeln verwendet werden können.

Der erste Funktionsblock ist das sogenannte Startkriterium.

Für jeden Motorstart wird abgefragt, weiche Kühlmitteltemperatur vorliegt, Dies erfolgt über den Sensor 46. Beträgt die Kühlmitteltemperatur < 80 °C, soll die Wasserpumpe nicht zugeschaltet werden. Bei höheren Temperaturen liegt kein Einsparpotenzial mehr vor, folglich kann die Wasserpumpe zugeschaltet werden oder zugeschaltet bleiben. Bei einer Ansauglufttemperatur oder Umgebungstemperatur von > 30° soll die Wasserpumpe beim Start ebenfalls zugeschaltet sein. Abfragen (Kühlwasser- und Umgebungstemperatur) werden mit "und" miteinander verknüpft.

Da beim Start das Kühlwasser im Kreislauf steht, kann optional zwingend vorgesehen sein, die Wasserpumpe zuerst wenige Sekunden zu betreiben, um die mittlere Kühlmitteltemperatur zu ermitteln, Anschließend wird dann die Wasserpumpe abhängig von der ermittelten Kühlwassertemperatur zu- oder abgeschattet.

Der zweite Funktionsblock ist die Fahrzeugheizung.

Zur zuverlässigen Entfrostung der Frontscheibe oder zur Sicherstellung ausreichenden Heizkomforts kann es unter Umständen hilfreich sein, entweder über den Heizschalter direkt mittels Signal oder über eine beliebig gestaltete Kennlinie den Ausschaltzeitpunkt der Wasserpumpe zu bestimmen. Wird Hetzanforderung übergeben, ist das Zuschaltkriterium für die Wasserpumpe dieses Funktionsblocks gegeben. Der Abschaltzeitpunkt kann auch von der Umgebungstemperatur abhängig sein.

Der dritte Funktionsblock ist der Motorlastzustand,

Die Motorlast, die der Fahrer vom Motor abfragt (zum Beispiel schnelle Fahrweise oder Anhängerbetrieb), kann durch e!ne "oder"-Verknüpfung gekoppelte Parameter Fahrgeschwindigkeit, Motordrehzahl und Kraftstoffverbrauch erfasst oder hochgerechnet werden.

Der vierte Funktionsblock ist ein sogenanntes Zeitsignal.

Zur Erzielung maximaler Kraftstoffeinsparung, insbesondere im Testzyklus, sollte die Wasserpumpe im gesamten Startzyklus, der ca. 800 Sekunden dauert, abgeschaltet bleiben. Demzufolge läuft ab jedem Motorstart eine Zeitroutine so ab, dass die Uhr nur beim Erststart bei dem Zeitpunkt t = 0 startet, dann aber bei diversen Wiederholstart weiterzählt, und zwar so lange, bis die Wasserpumpe einmal zugeschaltet wurde und der Motor einige Sekunden in Leerlaufdrehzahl belaufen ist.

Der fünfte Funktionsblock ist eine sogenannte Fehlerblockierung.

In der On-Board-Diagnose werden diverse Fehler detektiert und im Fehlerspeicher abgelegt, Wird zum Beispiel erkannt, dass der Temperatursensor des Motors defekt ist, wird der gesamte Logikplan überbrückt, und die Wasserpumpe läuft beim Motorstart stets mit. Sinnvollerweise wird man jene Parameter integrieren, die gegebenenfalls einen negativen Einfluss auf die Motorfunktion haben, wenn die Wasserpumpe abgeschaltet ist. Da bei einem erkannten Fehler in der On-Board-Diagnose stets von dem Funktionsblock Fehlerblockierung die Wasserpumpenfunktion gefordert wird, muss für das Zuschaltkriterium eine Negation erfolgen, das heißt bei x = 0 ist die Forderang seitens des Funktionsblocks "Fehlerblockierung" Wasserpumpe = 1 (das heißt in Funktion) zu übergehen.

Über die federbelastete Ausgangsstellung mit geschlossener Kupplung erhält man darüber hinaus eine zuverlässige Faitsafe-Funktion.

Zu betonen ist in diesem Zusammenhang auch, dass es nicht zwingend notwendig ist, ständig die Temperatur des Motors oder des Kühlmittels abzufragen. Über die Steuerung 44 sich über die vergangenen Motorlastzustände und den Zuschaltbetrieb der Fahrzeugheizung auch auf die Kühlmitteltemperatur und/oder die Motortemperatur hochrechnen.

Eine vereinfachte Funktionsweise des Verfahrens sieht nur die Abhängigkeit des Koppelns oder Entkoppelns der Wasserpumpe von der Temperatur des Motors und/oder des Kühlmittels vor, gegebenenfalls auch noch unter Berücksichtigung der Zeitdauer nach der Entkoppelung der Wasserpumpe, indem davon ausgegangen wird, dass nach einer bestimmten Zeitdauer nach Kaltstart die Wasserpumpe zuzuschalten ist.

Obige Verfahren lassen sich auch bei den nachfolgenden Kupplungsvorrichtungen verwenden.

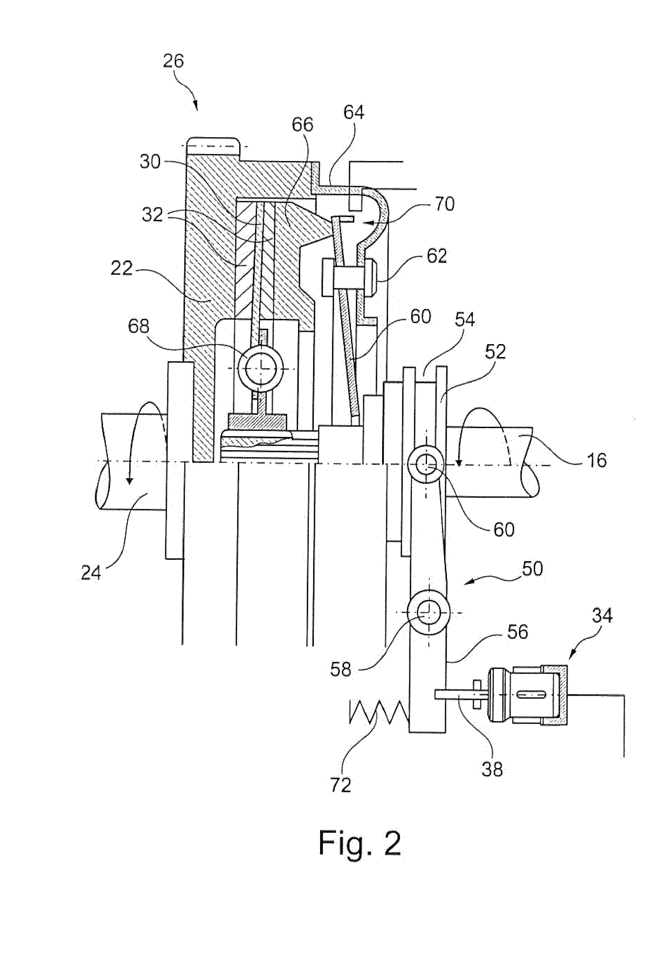

Die Ausführungsform der Kupplungsvorrichtung nach Figur 2 sieht eine Art Übersetzungseinrichtung 50 zwischen Betätigungselement 34 und den Lamellen 30, 32 vor. Auf der Abtriebswelle 16 sitzt ein sogenannter Ausrücken 52, in Form einer Scheibe mit einer Nut 54. Ein zweiarmiger Hebel 56 mit einem Schwenklager 58 hat einen Fortsatz 60, welcher in die Nut 54 ragt. Am entgegengesetzten Arm des Hebels 56 greift das Betätigungselement 34 an, welches den Hebel in Uhrzeigerrichtung schwenken kann.

Der Ausrücker 52 grenzt an ein innenseitiges Ende einer sogenannten Membranfeder 60 an, die über Niete 62 und eine Halterung 64 mit der Riemenscheibe 22 befestigt ist. Die Riemenscheibe 22 ist, wie bei der ersten Ausführungsform, mit der Antriebswelle 24 drehfest verbunden.

Die Membranfeder 60 stützt sich innenseitig an dem Ausrücken 52 ab und verläuft radial nach außen schräg in Richtung zur Antriebswelle 24, wo sie gegen eine Andrückplatte 66 gepresst wird, die wiederum axial durch die Membranfeder 60 verschiebbar die Lamellen 32 gegeneinanderpresst. Die Lamellen 32 klemmen so die abtriebsseitige Lamelle 30 zwischen sich.

Die Lamelle 30 ist über einen Torsionsdämpfer 68 mit der Abtriebswelle 16 gekoppelt.

In der gezeigten Position ist die Wasserpumpe zugeschaltet, da die Kupplung geschlossen ist. Wird das Betätigungselement 34 bestromt, sodaß der Dehnstoff den Kolben 38 nach außen schiebt, schwenkt der Hebel 56 im Uhrzeigersinn und schiebt den Ausrücken 52 nach rechts, sodass die Membranfeder 60 kein Gegenlager mehr hat und die Kupplung öffnet.

Ein Sensor 70, zum Beispiel ein Hall-Sensar, detektiert die Bewegung der Membranfeder 60. Der Sensor 70 kann als Hubsensor angesehen werden. Wird der notwendige Hub zum Öffnen der Kupplung erreicht, was durch den Sensor 70 detektiert wird, kann die Stromzufuhr zum Betätigungselement 34 abgeschaltet oder reduziert werden, sodass der Dehnstoff eine geringere Temperatur hat, die aber gerade noch ausreicht, um die Öffnungsstetfung der Kupplung zu erhalten, Wird dann für eine längere Zeit das Betätigungselement 34 nicht mehr bestromt, fährt der Kolben 38 wieder zurück, und der Hebel 56 schwenkt wieder in die Ausgangslage. Hier kann zusätzlich eine Rückstellfeder 72 vorgesehen sein, die stärker ist als die Membranfeder 60, um eine Failsafe-Funktion zu erreichen.

Eine schnelle Abkühlung des Dehnstoffs kann zum Beispiel dadurch erreicht werden, das Betätigungselement 34 im Fahrtwind positioniert wird, also durch ihn gekühlt wird, oder im Kühlkreislauf liegt.

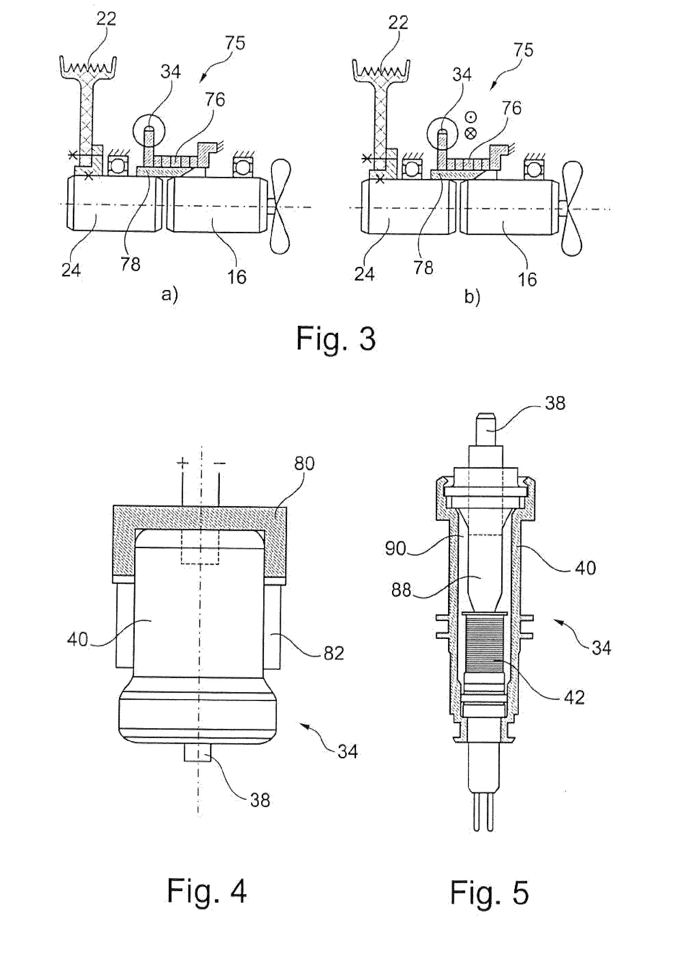

Die Ausführungsform nach den Figuren 3a und 3b sieht als Kupplung eine sogenannte Schlingfederkupplung 75 vor, ansonsten werden gleiche oder funktionsgleiche bereits erläuterte Teile mit den eingeführten Bezugszeichen versehen. Im Ausgangszustand, der in Figur 3a gezeigt ist und der die geschlossene Kupplung zeigt, wird ein Drehmoment von der Antriebs- auf die Abtriebswelle 24, 16 durch eine die beiden Wellen überbrückende, geschlitzte Hülse 78 übertragen. Außenseitig auf der Hülse 78 sitzt die Schlingfeder 76, weiche versucht, die Hülse 78 zusammenzupressen. Ein als Dehnstoffaktuator ausgebildetes Betätigungselement 34 ist mit einem Ende der Schlingfeder 76 gekoppelt und kann die Schlingfeder 76 entweder koppeln oder entkoppeln. In der in Figur 3a gezeigten Stellung ist das Betätigungselement 34 nicht stromdurchflossen und koppelt die Schlingfeder 76.

Soll die Wasserpumpe vom Antrieb entkoppelt werden, wird das Betätigungselement 34 bestromt (siehe Figur 3b), und die Schlingfeder 76 wird entkoppelt. Damit wird der Hülse 78 die Möglichkeit gegeben, sich aufzuweiten, sodass sie nicht mehr als Drehmoment übertragendes Teil fungiert. Der Vorteil einer Schiingfederkuppiung besteht vor allem in ihrem kompakten Aufbau, Sie lässt sich sehr leicht in die Riemenscheibe 22 integrieren.

Für die Ausbildung des Betätigungselements 34 stehen zahlreiche Optionen zur Verfügung.

In Figur 4 ist ein Betätigungselement 34 dargestellt, welches außenseitig mit einer Isolierung 80 umgeben ist, um die Motorraumtemperatur nicht unmittelbar auf es zu übertragen.

Darüber hinaus ist eine Kühlvorrichtung 82, zum Beispiel in Form eines Peltier-Elements, an der Außenseite des Betätigungselements 34 vorgesehen, das zum schnellen Abkühlen und Rückstellen des Betätigungselements 34 dient.

Bei der dargestellten Ausführungsform wird die Heizeinrichtung im Inneren des Betätigungselements 34 positioniert. Alternativ hierzu könnte auch ein extrem beheizter Dehnstoffaktuator, zum Beispiel ein PTC beheizter Dehnstoffaktuator vorhanden sein. Anstatt der Isolierung 80 wäre dann die Heizung vorgesehen.

Es gibt auch bekannte Konstruktionen, bei denen die Kammer im Inneren des Zylinders 40, die mit Dehnstoff gefüllt ist, ein sehr geringes Volumen aufweist, um ein schnelles Ansprechverhalten zu realisieren.

Die Heizeinrichtung kann innenseitig fest mit dem Zylinder 40 verbunden sein oder auch am Kolben 38 sitzen.

Bei der Ausführungsform nach Figur 5 ist die Heizeinrichtung 42 im Inneren des Betätigungselements 34 zu erkennen. Der Raum 88 im Inneren ist mit dem Dehnstoff gefüllt, Eine Isolationsschicht 90 begrenzt den mit Dehnstoff gefügten Raum 88.

## Patentansprüche

1. Kupplungsvorrichtung für ein von einem Verbrennungsmotor (18) angetriebenes Aggregat (12) eines Fahrzeugs, mit einer drehfest mit dem Verbrennungsmotor (18) gekoppelten Antriebswelle (24), einer drehfest mit dem Aggregat (12) verbundenen Abtriebswelle (16) und einer zwischen Antrieb- und Abtriebswelle (24, 16) vorgesehenen schaltbaren Kupplung, **dadurch gekennzeichnet, dass** die Kupplung als mechanische Reibkupplung (26) ausgebildet ist, die eine Kopplung und eine vollständige Entkopplung von Antriebs- und Abtriebswelle (24, 16) ermöglicht, und dass wenigstens ein Betätigungselement (34) in Form eines beheizbaren Dehnstoffaktuators vorgesehen ist, welcher ein Schalten der Kupplung von ihrem gekoppelten Zustand in ihren entkoppelten Zustand ermöglicht,

2. Kupplungsvorrichtung nach Anspruch 1, **dadurch gekennzeichnet, dass** sich die Kupplung (26) bei aktiviertem Betätigungselement (34) in ihrem vollständig entkoppelten Zustand und bei nicht aktiviertem Betätigungselement (34) in ihrem gekoppelten Zustand befindet.

3. Kupplungsvorrichtung nach Anspruch 1 oder 2, **dadurch gekennzeichnet**, der beheizbare Dehnstoffaktuator eine elektrisch Heizeinrichtung (42) aufweist, welche im Inneren des Betätigungselements (34) mit Kontakt zum Dehnstoff angeordnet ist.

4. Kupplungsvorrichtung nach einem der vorhergehenden Ansprüche, **dadurch gekennzeichnet, dass** die Kupplung eine trocken laufende Reibscheibenkupplung, insbesondere in Form einer Lamellenkupplung, oder eine Schlingfederkupplung ist.

5. Kupplungsvorrichtung nach einem der vorhergehenden Ansprüche, **dadurch gekennzeichnet, dass** die Antriebswelle (24) mit einer Riemenscheibe (22) verbunden ist, in die die Kupplung (26) integriert ist.

6. Kupplungsvorrichtung nach einem der vorhergehenden Ansprüche, **dadurch gekennzeichnet, dass** das Aggregat (12) eine Wasserpumpe der Motorkühlung ist.

7. Kupplungsvorrichtung nach einem der vorhergehenden Ansprüche, **dadurch gekennzeichnet, dass** eine Übersetzungseinrichtung (50) zwischen dem Betätigungselement (34) und der Kupplung (26) vorgesehen ist.

8. Kupplungsvorrichtung nach einem der vorhergehenden Ansprüche, **dadurch gekennzeichnet, dass** eine Kühlvorrichtung (82) vorgesehen ist und/oder dass das Betätigungselement (34) thermisch mit dem Kühlmittelkreislauf des Verbrennungsmotors direkt oder indirekt gekoppelt ist.

9. Kupplungsvorrichtung nach einem der vorhergehenden Ansprüche, **dadurch gekennzeichnet, dass** eine Steuerung (44) mit dem Betätigungselement (34) verbunden ist, in der ein Kennfeld für Fahrzeugbetriebszustände abgelegt ist, und dass die Steuerung (44) das Betätigungselement (34) in Abhängigkeit von dem Fahrzeugbetriebszustand aktiviert.

10. Verfahren zur Steuerung einer Kupplungsvorrichtung nach einem der vorhergehenden Ansprüche, weiche ein Koppeln und vollständiges Entkoppeln einer Wasserpumpe einer Motorkühlung von einer vom Vierbrennungsmotor angetriebenen Antriebswelle (24) ermöglicht, wobei die Wasserpumpe
a) in Abhängigkeit von der Temperatur des Kühlwassers und/oder des Verbrennungsmotors, vorzugsweise bei Unterschreiten einer vorbestimmten Temperatur, und/oder
b) bei Kaltstart des Motors oder nach einer vorgegebenen Zeit nach Kaltstart des Motors und/oder
c) in Abhängigkeit vom Fahrzeugbetriebszustand betätigt wird,
um durch Aktivierung des Betätigungsetements (34) die Abtriebswelle (16) von der Antriebswelle (24) zu entkoppeln,

11. Verfahren nach Anspruch 10, **dadurch gekennzeichnet, dass** die Wasserpumpe nach einer vorbestimmten Zeitdauer nach der Entkopplung mit der Antriebswelle (24) gekoppelt wird.

12. Verfahren nach Anspruch 11 , **dadurch gekennzeichnet, dass** die vorbestimmte Zeitdauer in Abhängigkeit von Parametern des Verbrennungmotors (18) bestimmt wird.

13. Verfahren nach einem der Ansprüche 10 bis 12, **dadurch gekennzeichnet, dass** die Wasserpumpe bei einem Kaltstart des Verbrennungsmotors (18) für vorbestimmte Zeitdauer mit dem Verbrennungsmotor (18) drehmomentverbunden wird.

14. Verfahren nach einem der Ansprüche 10 bis 13, **dadurch gekennzeichnet, dass** die Wasserpumpe bei einem Ausfall des Betätigungselements (34) mit der Antriebswelle (24) drehmomentverbunden wird.
